# EUROPEAN PATENT APPLICATION

(11) **EP 1 445 706 A1**
(43) Date of publication of application: **11.08.2004**
(21) Application number: 03090016.1
(22) Date of filing: 18.01.2003
(51) Int. Cl.: G06F 17/14

(54) **Method, apparatus, and computer program for performing a modified discrete cosine transform**

(71) Applicant: DEUTSCHE THOMSON-BRANDT GMBH, 78048 Villingen-Schwenningen (DE)
(72) Inventor: Baum, Peter G., 30539 Hannover (DE)
(74) Representative: Hartnack, Wolfgang, Dipl.-Ing.

(57) **Abstract**

The invention relates to performing an MDCT of a digital input signal of length N, wherein by generating a specific intermediate signal of length N/2 the MDCT can be performed by a number of only N²/4 multiplications of data values of the intermediate signal with cosine values.

## Description

The invention relates to digital signal processing, and more particularly to the computation of an MDCT.

### Background

Many audio and video codecs like MPEG 1/2 Layer III, ATRAC, AAC and others use the MDCT. Performing an MDCT is quite expensive both in terms of the required computing power as well as the required storage space. This is particularly disadvantageous for consumer devices as a relatively expensive central processing unit (CPU) and a large memory are required to calculate the required MDCTs.
Various attempts have been made in the prior art to reduce the computational complexity of an MDCT. Such methods are disclosed for example in WO-A-01/59603 and in V. Britanak, K.R. Rao, "A new fast algorithm for the unified forward and inverse MDCT/MDST computation", Signal Processing 82 (2002), 433-459.

### Invention

The MDCT can be calculated either directly in a double loop or using an FFT. Since the latter involves transformation of a signal length that is the double of the original length N, and some data copying, the former is - dependent on the processor used - faster for shorter MDCT block lengths. Especially the MDCT of MPEG 1/2 Layer III has a length of '18', which cannot be easily calculated with an FFT since '18' it is not a power of '2'.

A problem to be solved by the invention is performing an MDCT that requires a reduced amount of computing power and memory. This problem is solved by the method disclosed in claim 1. A corresponding computer program product implementing such method is disclosed in claim 5. An electronic circuit that utilises this method is disclosed in claim 6, and a corresponding codec is disclosed in claim 10.

Advantageously the invention facilitates reducing the number of multiplications and additions in the loop of the direct calculation of the MDCT by a factor of '2', for the expense of N/2 additional additions, with N being the length of a processing or transform block for sample values of the input signal. N can be a number that is not a power of '2', for example N = 18.
The invention enables to calculate an MDCT by performing only N²/4 multiplications for transforming a digital input signal of length N. This is accomplished by first generating an intermediate signal based on the input signal. For the generation of the intermediate signal, additions and subtractions only are required, which are far less computationally expensive than multiplications.
In accordance with a further embodiment of the invention a cosine table is used for calculating the MDCT. The cosine table requires a number of N²/2 cosine values only such that a relatively small memory can be used for the implementation of the invention.
The invention is particularly advantageous for audio and/or video codecs, such as MPEG 1/2 layer III, ATRAC, AAC and others. The invention enables to construct an audio and/or video consumer device, such as an MPEG player or a DVD player, with reduced processing power and memory requirements.

In principle, the inventive method is suited for performing a modified discrete cosine transform of a digital input signal of length N, the method including the steps of:
- generating an intermediate signal of length N/2 based on said input signal;
- performing a number of N²/4 multiplications of data values of the intermediate signal with cosine values to generate an transformed output signal.

In principle the inventive electronic circuit performs a modified discrete cosine transform of a digital input signal of length N, the electronic circuit including:
- a cosine table having a number of N²/4 cosine values;
- means for generating an intermediate signal of length N/2 based on said input signal, and for multiplication of the data values of said intermediate signal so as to generate a modified discrete cosine transformed output signal.

Advantageous additional embodiments of the invention are disclosed in the respective dependent claims.

### Drawings

Exemplary embodiments of the invention are described with reference to the accompanying drawings, which show in:
- Fig. 1: flow chart;
- Fig. 2: block diagram of a preferred implementation of an electronic circuit in accordance with the invention.

### Exemplary embodiments

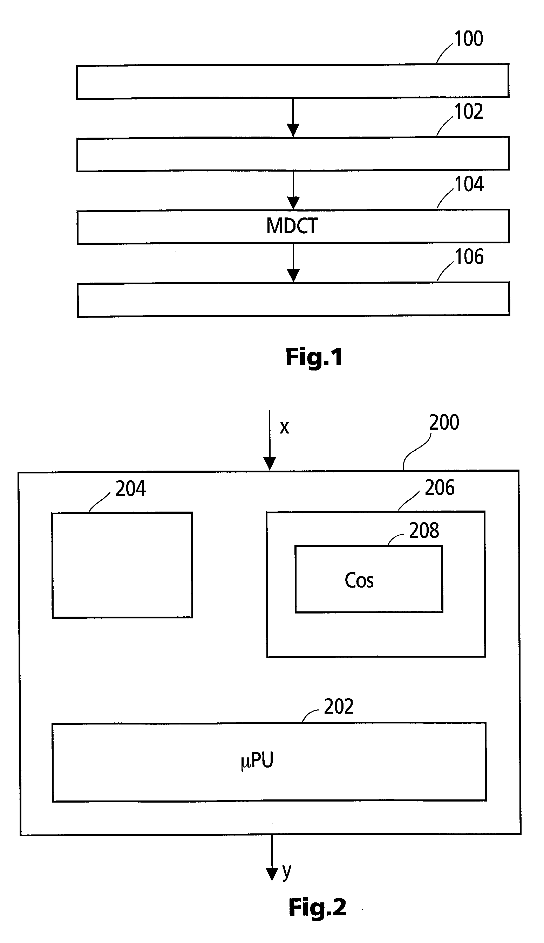

In accordance with the flow chart of Fig. 1 a digital input signal is provided in step 100. The digital input signal has a block length of N, i.e. the digital input signal in each case has a number of N data values. For performing an MDCT on the digital input signal provided in step 100, firstly an intermediate signal is calculated in step 102. The intermediate signal has a length of N/2. One way of calculating this intermediate signal by means of N/2 additions/subtractions will be explained in detail below. In step 104 an MDCT is calculated based on the intermediate signal that has been determined in step 102. When the intermediate signal has a length of N/2, a number of N²/4 multiplications are required to calculate the MDCT on the basis of the intermediate signal. In step 106 the MDCT transformed signal is output for further processing.

A direct calculation of the MDCT can carried out as follows:
for m = 0 to (N/2-1)
s = 0;
for k = 0 to (N-1)
s = s + x(k) * cos (π/2/N * (2*k+1+N/2) * (2*m+1));
end
y(m) = s;
end,
where x is the digital input signal of length N, y is the transformed signal and m is a running index.

The inventive calculation of the intermediate signal in step 102 can be performed as follows:
for m = 0 to (N/4-1)
xx(m) = x(N/4+m) - x(N/4-m-1);
xx(m+N/4) = x(N/2+m) + x(N-m-1);
end,
where x is the digital input signal of length N, xx is the intermediate signal and m is a running index.
It is to be noted that the calculation of the intermediate signal does not require multiplications and is therefore very fast.
On the basis of this intermediate signal xx the MDCT can be calculated as follows:
for m = 0 to (N/2-1)
s = 0;
for k = 0 to (N/2-1)
s = s + xx(k) * cos (π/2/N * (2*k+1+N) * (2*m+1));
end
y(m) = s;
end,
where y is the transformed signal.
It is particularly advantageous that the calculation of the MDCT requires a number of only N²/4 multiplications with the cosine values.

Fig. 2 shows a simplified block diagram of an electronic circuit 200 receiving the input signal x. This circuit can be implemented on a single chip. It has a processing unit 202, a program memory 204 and a memory 206 for storing a cosine table 208.
Program code for performing the calculation of the intermediate signal (cf. step 102 of Fig. 1) and for calculating the MDCT (cf. step 104 of Fig. 1) is stored in the program memory 204.
Cosine table 208 has a number of N²/2 cosine value entries which are used by the processing unit 202 when the program code of program memory 208 is executed in order to perform the required multiplications with the cosine values to obtain the MDCT transformed output signal y.

## Claims

1. Method of performing a modified discrete cosine transform (MDCT) of a digital input signal (100, x) of length N, the method including the steps of:
- generating (102) an intermediate signal (xx) of length N/2 based on said input signal;
- performing (104) a number of N²/4 multiplications of data values of the intermediate signal with cosine values (Cos) to generate an transformed output signal (106, y).

2. Method according to claim 1, wherein said intermediate signal denoted 'xx' is calculated based on said input signal denoted 'x' as follows:
for m = 0 to (N/4-1)
xx(m) = x(N/4+m) - x (N/4-m-1);
xx(m+N/4) = x(N/2+m) + x(N-m-1);
end.

3. Method according to claim 1 or 2, wherein the multiplications of the data values of the intermediate signal 'xx' with the cosine values to obtain the transformed signal denoted 'y' is performed as follows:
for m = 0 to (N/2-1)
s = 0;
for k = 0 to (N/2-1)
s = s + xx(k)*cos(π/2/N * (2*k+1+N) * (2*m+1));
end
y(m) = s;
end.

4. Method according to one of claims 1 to 3, wherein a cosine table (Cos) having a number of N²/4 cosine values is used to provide the cosine values for said multiplications.

5. Computer program product, e.g. a digital storage medium, having program means for performing a method in accordance with one of the claims 1 to 4.

6. Electronic circuit for performing a modified discrete cosine transform (MDCT) of a digital input signal (x) of length N, the electronic circuit including:
- a cosine table (208) having a number of N²/4 cosine values;
- means (202, 204) for generating an intermediate signal (xx) of length N/2 based on said input signal (x), and for multiplication of the data values of said intermediate signal (xx) so as to generate a modified discrete cosine transformed output signal (y).

7. Circuit according to claim 6, said means for generating said intermediate signal denoted 'xx' based on said input signal denoted 'x' being adapted to perform the steps of:
for m = 0 to (N/4-1)
xx (m) = x (N/4+m) - x (N/4-m-1) ;
xx (m+N/4) = x (N/2+m) + x (N-m-1);
end.

8. Circuit according to claim 6 or 7, further including multiplier means (202) for performing a number of N²/4 multiplications of the data values with cosine values of the cosine table.

9. Circuit according to claim 8, further including adder means (202), said multiplication means and said adder means being adapted to perform the steps of:
for m = 0 to (N/2-1)
s = 0;
for k = 0 to (N/2-1)
s = s + xx(k)*cos(π/2/N * (2*k+1+N) * (2*m+1));
end
y (m) = s;
end,
wherein 'y' is the transformed output signal.

10. Codec, e.g. an MPEG 1/2 layer III, ATRAC or AAC codec, for performing a modified discrete cosine transform of an input signal using an electronic circuit according to one of claims 6 to 9.
